# EUROPEAN PATENT SPECIFICATION

(11) **EP 3 783 170 B1**
(45) Date of publication and mention of the grant of the patent: **13.10.2021**
(21) Application number: 20164196.6
(22) Date of filing: 19.03.2020
(51) Int. Cl.: E04H 4/16

(54) **SUCTION CLEANER FOR SWIMMING POOLS**
SAUGREINIGER FÜR SCHWIMMBECKEN
APPAREIL DE NETTOYAGE PAR ASPIRATION POUR PISCINE

(30) Priority: 21.08.2019 CN 201910774384
(43) Date of publication of application: 24.02.2021
(73) Proprietor: NingBo Poolstar Pool Products Co., Ltd, Ningbo, Zhejiang 315033 (CN)
(72) Inventor: CHEN, Liang, Ningbo, Zhejiang 315033 (CN)
(74) Representative: Vitina, Maruta

(56) References cited:
- WO-A1-2009/133328
- WO-A1-2011/049594
- CN-A- 109 424 223

## Description

### TECHNICAL FIELD

The present invention relates to the technical field of pool cleaning, and particularly relates to a suction cleaner for a pool.

### BACKGROUND OF THE PRESENT INVENTION

At present, the suction cleaner for the pool is a cleaning device for the pool cleaning requirements. The suction cleaner for the pool can climb autonomously on the bottom and the wall of the pool, repeatedly clean the dirt in the pool, filter the water in the pool, and keep the water quality of the pool in a normal range, thereby becoming an indispensable device for the normal maintenance of the pool.

However, a water outlet joint of the existing suction cleaner for the pool is rigidly connected with the cleaner. When the cleaner travels to the pool wall for cleaning the wall cleaning and climbing, the cleaner will be affected by the water pipe. Because the water pipe also greatly bends, cleaner will be impacted to a certain degree. Meanwhile, the requirements for the flexibility of the water pipe are also high, which influences the wall climbing effect of the cleaner. When the cleaner travels to the corner position of the pool, the cleaner is also easy to jam, thereby reducing the cleaning efficiency. Meanwhile, a slippage phenomenon is easy to occur when a reversing mechanism is reversed, and the phenomenon of tooth jamming causes unstable reversing, increases damage and abrasion of the teeth and reduces the service life

Application CN109424223A discloses a hydraulic cleaner, which includes a housing,a hydraulic motor and a power output structure, according to the preamble of claim 1. The housing is provided with a water inlet at a bottom of the housing. The hydraulic motor is arranged in a middle of an interior of the housing; the hydraulic motor includes a cavity, a water inlet and a water outlet; a hollow part of the cavity is provided with a flow channel, a motor output shaft, a plurality of fan blade structures and a plurality of flow baffle pieces; ends of the flow channel are communicated with the water inlet and the water outlet, respectively. The power output structure includes a power transmission assembly, a caterpillar track and a wheel.

Application WO2011/049594A1 discloses a pool cleaner, which includes a body having a debris inlet and a debris outlet. The body is adapted at the debris outlet for securement of either a water-suction hose connected to a remote suction system or a debris-collection device entrapping debris and passing water therethrough back into the pool. A venturi-line structure is secured with respect to the body.The venturi-line structure includes a venturi-line inlet adapted for connection of a waterflow line fed by a remote pump and a venturi jet located at the debris inlet to cause accelerated flow substantially thereacross and into the body when the cleaner is used as a pressure cleaner. The body includes a debris-inlet adjuster configured to reduce the debris inlet to adapt the cleaner for use as a suction cleaner,whereby the pool cleaner is interchangeably usable as a suction cleaner and as a pressure cleaner.

Application WO 2009/133328 A1 discloses a swimming pool vacuum cleaner brush head, including a cover cooperating with: a first connector piece of a handle with a rotational joint about a first axis (X1X′1) to which an end of the handle can be connected, preferably in a fixed manner, a second connector piece for a suction tube, comprising a second tubular end-piece opening in a suction opening on the bottom face of the cover. According to the invention, the second connector piece includes a joint device which is free to rotate, permitting a rotation of the axis (Y2Y′2) of the second tubular end-piece about all axes of rotation called the second axis of rotation, perpendicular to and intersecting the centre (C) of the ball-joint, with the axis (YY′) of the suction opening, such as to permit a variable inclination α2 of the axis (Y2Y′2) of the second tubular end-piece with relation to the axis (YY′) of the suction opening within a cone of apex half-angle (C) α2 max with a value of at least 20°, preferably at least 30° with relation to the axis (YY′) of the suction opening.

### SUMMARY OF THE PRESENT INVENTION

The purpose of the present invention is to provide a suction cleaner for a pool, so as to solve the technical problems that: a water pipe impacts a cleaner due to rigid connection between a water outlet joint of the cleaner and the cleaner, is easy to block when travelling to a corner position of a pool and affects cleaning efficiency; meanwhile, a slippage phenomenon is easy to occur when a reversing mechanism is reversed, and the phenomenon of tooth jamming causes unstable reversing, increases damage and abrasion of the teeth and reduces the service life.

To achieve the above purpose, the suction cleaner according to the invention is realized according to claim 1.

Further, the rotating swing joint mechanism is composed of a swing head component, an upper cover plate and a lower fixing bracket, wherein the swing head component can swing back and forth and is installed between the upper cover plate and the lower fixing bracket; and the upper cover plate is fixedly connected with the lower fixing bracket.

Further, the swing head component is composed of a water outlet joint, a joint fixing bracket and a fixing collar, wherein a through hole is formed on the top of the joint fixing bracket; the water outlet joint penetrates through the through hole; the fixing collar is arranged at the through hole, is clamped with the joint fixing bracket, and is used for axially fixing the water outlet joint to the joint fixing bracket; and the water outlet joint can rotate relative to the joint fixing bracket.

Further, the first transmission mechanism includes a power transmission shaft and a transmission gear set, wherein the first gear and the transmission gear set are engaged with each other; one end of the power transmission shaft is engaged with the third transmission mechanism; the other end of the power transmission shaft is engaged with the fourth transmission mechanism; the power transmission shaft is fixedly connected with the transmission gear set; and the transmission gear set drives the power transmission shaft to rotate.

Further, one end of the power transmission shaft connected with the third transmission mechanism is a two-section gear structure.

Further, the second transmission mechanism is a reduction gear set; the third transmission mechanism includes a driving wheel, a third transmission driven wheel and an output shaft with a gear; a driving wheel gear is also arranged on one side of the driving wheel near the travelling mechanisms; the driving wheel gear and the driving wheel are of an integrated structure; the driving wheel gear is engaged with the third transmission driven wheel; the third transmission driven wheel is engaged with the output shaft; the output shaft is connected with the travelling mechanisms; and the fourth transmission mechanism has the same structure as the third transmission mechanism.

Further, the driving wheel is a rotating body having both a driving wheel internal gear and a driving wheel external gear, and the driving wheel internal gear and the driving wheel external gear are in coaxial positions; the power transmission shaft in the first transmission mechanism is arranged between the driving wheel internal gear and the driving wheel external gear, and is engaged with the driving wheel internal gear or the driving wheel external gear; when the power transmission shaft is engaged with the driving wheel internal gear, engaging rotation directions are the same direction; and when the power transmission shaft is engaged with the driving wheel external gear, the engaging rotation directions are opposite directions.

Further, the reversing mechanism includes a guide member and a movable member; the guide member is a cam having a larger radius part and a smaller radius part; the guide member is connected with the second transmission mechanism; the second transmission mechanism drives the guide member to rotate; the movable member includes a roller and a roller bracket; the roller is arranged at one end of the roller bracket near the guide member and is rotatably connected with the roller bracket; the roller bracket can slide back and forth; the roller bracket is sleeved on the power transmission shaft in the first transmission mechanism; the roller bracket drives the power transmission shaft to slide back and forth together; and the guide member is in contact with the roller.

Further, the travelling mechanism is composed of a driven wheel, a driving wheel and a track; an inner surface and an outer surface of the track are provided with teeth; the teeth on the inner surface of the track are engaged with the driving wheel and the driven wheel; both sides of the track are convex and wrap the driving wheel and the driven wheel, or the driven wheel and the driving wheel are provided with grooves; the track is nested in the grooves of the driving wheel and the driven wheel; and the width of the track is smaller than the width of the grooves.

The present invention has the following beneficial effects: by adopting the movable rotating swing joint mechanism, the present invention can swing and rotate back and forth relative to the travelling direction of the cleaner, which is beneficial for preventing the cleaner from being easily affected by a water pipe when the cleaner climbs up the wall of the pool for cleaning, so that the water pipe does not impact the cleaner and requirements for the flexibility of the water pipe are also reduced. Since there is no problem of corner jamming caused by the impact of the water pipe, the cleaning efficiency is also improved. At the same time, one end of the power transmission shaft in the first transmission mechanism, which is connected with the third transmission mechanism, is a two-section gear structure. When engaged with the driving wheel internal gear or the driving wheel external gear, the power transmission shaft can make smooth transition, and is not easy to cause tooth hitting and slippage phenomena.

### BRIEF DESCRIPTION OF THE DRAWINGS

Fig. 1 is an exploded view of the present invention;
Fig. 2 is an exploded view of a rotating swing joint mechanism of the present invention;
Fig. 3 is an exploded view of a swing head component of the present invention;
Fig. 4 is an internal structural three-dimensional diagram of the present invention;
Fig. 5 is a three-dimensional diagram of a connection relationship of a first transmission mechanism of the present invention;
Fig. 6 is a three-dimensional diagram of engagement of a driving wheel and a power transmission shaft of the present invention;
Fig. 7 is a three-dimensional diagram of a third transmission mechanism of the present invention;
Fig. 8 is a three-dimensional diagram of a reversing mechanism of the present invention;
Fig. 9 is a schematic diagram of a swing direction of a swing head component of the present invention; and
Fig. 10 is a schematic diagram of a water stream direction of the present invention.

In the drawings: 1 housing; 2 hydraulic motor; 21 motor output shaft; 22 first gear; 23 second gear; 24 impeller component; 3 traveling mechanism; 31 driven wheel; 32 driving wheel; 33 track; 4 reversing mechanism; 41 guide member; 42 movable member; 421 roller; 422 roller bracket; 5 rotating swing joint mechanism; 51 swing head component; 511 water outlet joint; 512 joint fixing bracket; 5121 through hole; 513 fixing collar; 52 upper cover plate; 521 installing hole; 53 lower fixing bracket; 54 rotating shaft; 6 first transmission mechanism; 61 power transmission shaft; 611 two-section gear; 62 transmission gear set; 621 third gear; 622 fourth gear; 623 fifth gear; 7 second transmission mechanism; 8 third transmission mechanism; 81 driving wheel; 811 driving wheel gear; 812 driving wheel internal gear; 813 driving wheel external gear; 82 third transmission driven wheel; 83 output shaft; 9 fourth transmission mechanism; 10 water inlet; and 11 rolling skirt wing.

### DETAILED DESCRIPTION OF THE PRESENT INVENTION

In order to make the technical problems solved by the present invention, the technical solutions and the beneficial effects clearer, the present invention is further described in detail below in combination with the embodiments. It should be understood that the specific embodiments described herein are only used to explain the present invention and are not intended to limit the present invention.

It should be understood that in the description of the present invention, terms such as "left" and "right" indicate direction or position relationships shown based on the drawings, and are only intended to facilitate the description of the present invention rather than to require that the present invention must be constructed and operated in a specific direction, and therefore, shall not be understood as a limitation to the present invention.

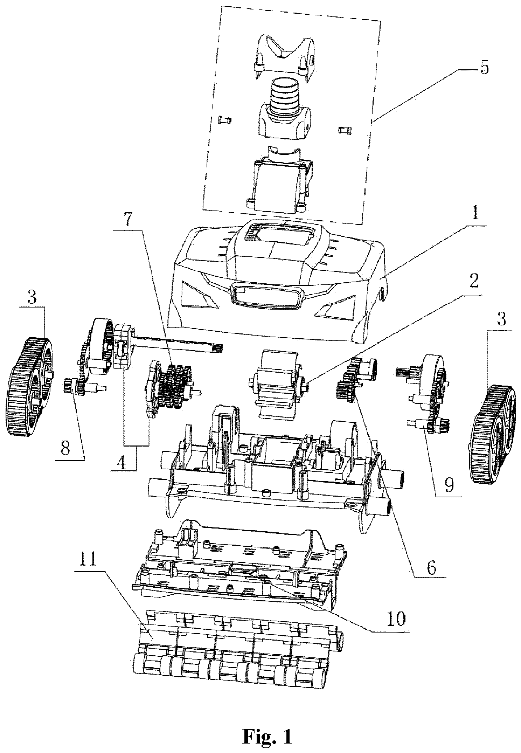

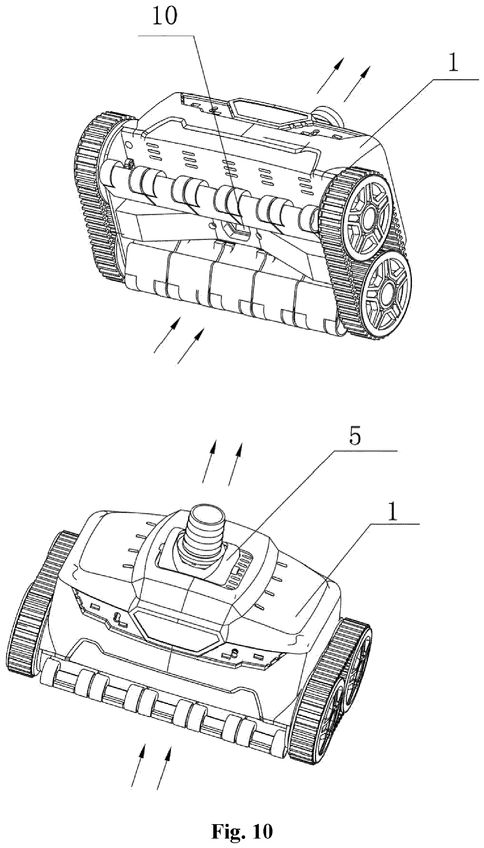

As an example, as shown in Fig. 1, the present invention provides a suction cleaner for a pool, including a housing 1 which is provided with a water inlet 10 in the middle position of the bottom; a hydraulic motor 2 used for providing power for the cleaner; travelling mechanisms 3 used for travelling; a reversing mechanism 4 used for changing a travelling direction; a rotating swing joint mechanism 5 used for connecting an external water outlet pipe and capable of swinging and rotating back and forth relative to the housing 1,
wherein the hydraulic motor 2 and the reversing mechanism 4 are arranged in the housing 1; the hydraulic motor 2 is arranged in the middle position in the housing 1 and is communicated with the water inlet 10; the travelling mechanisms 3 are symmetrically arranged on the left side and the right side of the housing 1; the rotating swing joint mechanism 5 is arranged in the middle position on the top of the housing 1 and is communicated with the hydraulic motor 2; one end of a motor output shaft 21 of the hydraulic motor 2 is provided with a first gear 22 and the other end is provided with a second gear 23; the first gear 22 is engaged with a first transmission mechanism 6; the first transmission mechanism 6 is respectively engaged with a third transmission mechanism 8 and a fourth transmission mechanism 9; the third transmission mechanism 8 and the fourth transmission mechanism 9 are respectively engaged with the travelling mechanisms 3 on the left side and the right side of the housing 1; the second gear 23 is engaged with the reversing mechanism 4 through the second transmission mechanism 7; the reversing mechanism 4 is connected with the first transmission mechanism 6; by referring to Fig. 10, the water inlet 10, the hydraulic motor 2 and the rotating swing joint mechanism 5 form a water circulation passage for a water stream to pass through; and the hydraulic motor 2 is composed of an impeller component 24.

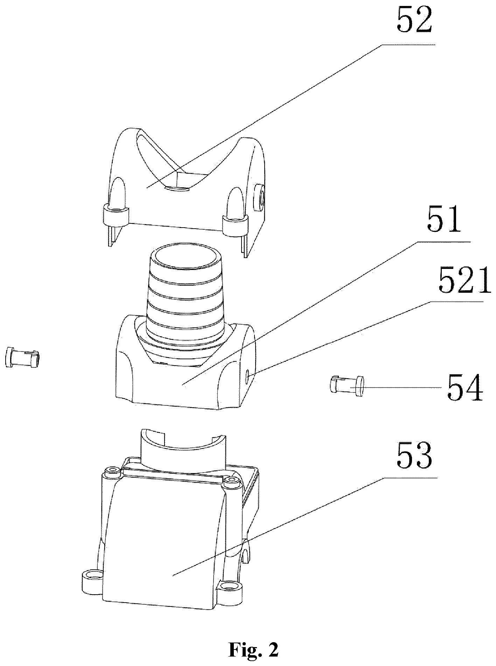

As shown in Fig. 2, the rotating swing joint mechanism 5 is composed of a swing head component 51, an upper cover plate 52 and a lower fixing bracket 53, wherein the swing head component 51 can swing back and forth and is installed between the upper cover plate 52 and the lower fixing bracket 53; and the upper cover plate 52 is fixedly connected with the lower fixing bracket 53. Specifically, the swing head component 51 is matched with installing holes 521 on both sides of the upper cover plate 52 through a rotating shaft 54 or a pin, and the swing head component 51 swings back and forth by using the installing holes 521 on both sides of the upper cover plate 52 as circle centers.

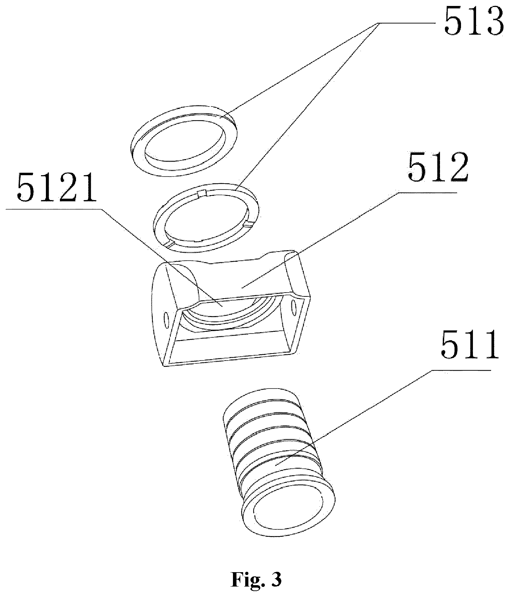

As shown in Fig. 3, the swing head component 51 is composed of a water outlet joint 511, a joint fixing bracket 512 and a fixing collar 513, wherein a through hole 5121 is formed on the top of the joint fixing bracket 512; the water outlet joint 511 penetrates through the through hole 5121; the fixing collar 513 is arranged at the through hole 5121, is clamped with the joint fixing bracket 512, and is used for axially fixing the water outlet joint 511 to the joint fixing bracket 512; and since the water outlet joint 511 is not fixed circumferentially, the water outlet joint 511 is only axially fixed to the joint fixing bracket 512 and the water outlet joint 511 can rotate relative to the joint fixing bracket 512.

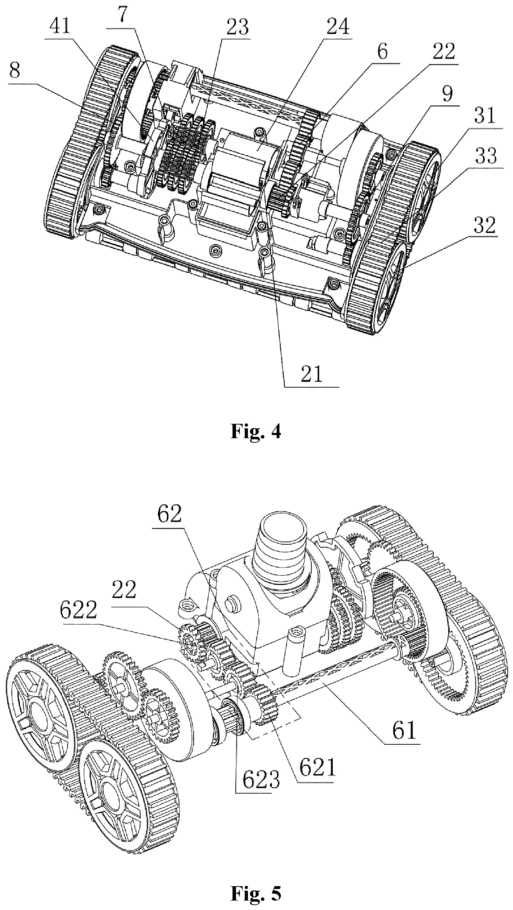

As shown in Fig. 5, the first transmission mechanism 6 includes a power transmission shaft 61 and a transmission gear set 62, wherein the first gear 22 and the transmission gear set 62 are engaged with each other; one end of the power transmission shaft 61 is engaged with the third transmission mechanism 8; the other end of the power transmission shaft 61 is engaged with the fourth transmission mechanism 9; the power transmission shaft 61 is fixedly connected with the transmission gear set 62; and the transmission gear set 62 drives the power transmission shaft 61 to rotate. Specifically, the transmission gear set 62 includes a third gear 621, a fourth gear 622 and a fifth gear 623. The third gear 621 is fixedly arranged on the power transmission shaft 61. The fourth gear 622 and the fifth gear 623 are arranged between the first gear 22 and the third gear 621. The first gear 22 and the fourth gear 622 are engaged. The third gear 621 is engaged with the fifth gear 623, and the fourth gear 622 is engaged with the fifth gear 623, thereby transmitting power to the power transmission shaft 61.

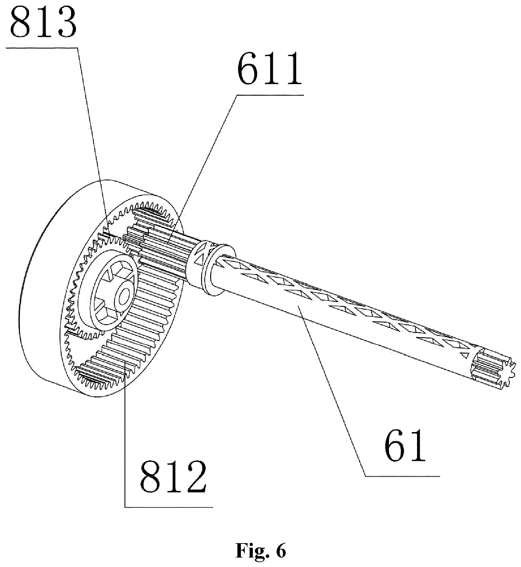

As shown in Fig. 6, one end of the power transmission shaft 61 connected with the third transmission mechanism 8 is a structure of a two-section gear 611. In this way, a transmission ratio when the power transmission shaft 61 is engaged with the driving wheel internal gear 812 and a transmission ratio when the power transmission shaft 61 is engaged with the driving wheel external gear 813 can be set close to each other. When the power transmission shaft 61 switches the engagement between the driving wheel external gear 813 and the driving wheel internal gear 812, a slippage phenomenon is not easy to occur.

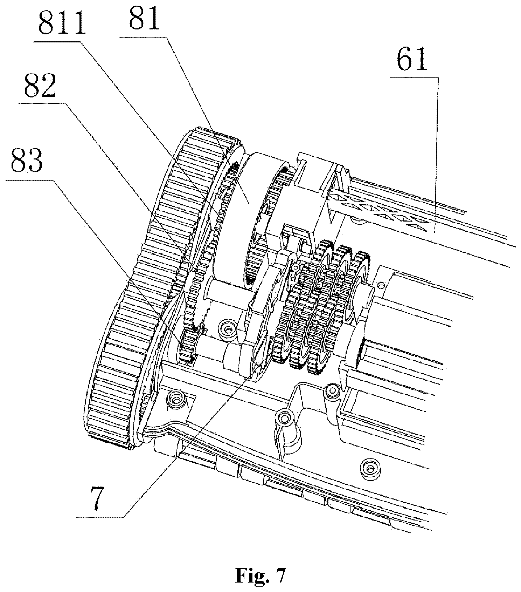

As shown in Fig. 7, the second transmission mechanism 7 is a reduction gear set; the third transmission mechanism 8 includes a driving wheel 81, a third transmission driven wheel 82 and an output shaft 83 with a gear; a driving wheel gear 811 is also arranged on one side of the driving wheel 81 near the travelling mechanisms 3; the driving wheel gear 811 and the driving wheel 81 are of an integrated structure; the driving wheel gear 811 is engaged with the third transmission driven wheel 82; the third transmission driven wheel 82 is engaged with the output shaft 83; the output shaft 83 is connected with the travelling mechanisms 3 to drive the travelling mechanisms 3 to travel; and the fourth transmission mechanism 9 and the third transmission mechanism 8 have the same structures and are symmetrically arranged. However, one end of the power transmission shaft 61 connected with the fourth transmission mechanism 9 is axially fixed, and can only be engaged with the driving wheel internal gear 812. The fourth transmission mechanism 9 can only rotate in one direction.

As shown in Fig. 6, the driving wheel 81 is a rotating body having both a driving wheel internal gear 812 and a driving wheel external gear 813, and the driving wheel internal gear 812 and the driving wheel external gear 813 are in coaxial positions; the power transmission shaft 61 in the first transmission mechanism 6 is arranged between the driving wheel internal gear 812 and the driving wheel external gear 813, and is engaged with the driving wheel internal gear 812 or the driving wheel external gear 813; when the power transmission shaft 61 is engaged with the driving wheel internal gear 812, engaging rotation directions are the same direction; and when the power transmission shaft 61 is engaged with the driving wheel external gear 813, the engaging rotation directions are opposite directions.

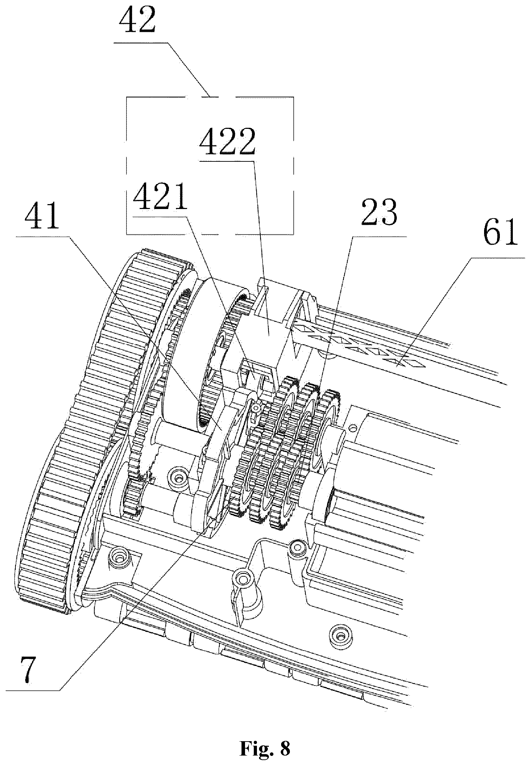

As shown in Fig. 8, the reversing mechanism 4 includes a guide member 41 and a movable member 42; the guide member 41 is a cam having a larger radius part and a smaller radius part; the guide member 41 is connected with the second transmission mechanism 7; the second transmission mechanism 7 drives the guide member 41 to rotate; the movable member 42 includes a roller 421 and a roller bracket 422; the roller 42 is arranged at one end of the roller bracket 422 near the guide member 41 and is rotatably connected with the roller bracket 422; the roller bracket 422 can slide back and forth; the roller bracket 422 is sleeved on the power transmission shaft 61 in the first transmission mechanism 6; the roller bracket 422 drives the power transmission shaft 61 to slide back and forth together; and the guide member 41 is in contact with the roller 421.

As shown in Fig. 1, a plurality of rolling skirt wings 11 are also symmetrically arranged at the bottom of the housing 1; the rolling skirt wings 11 are rotatably connected with the housing 1; and the rolling skirt wings 11 are used to increase suction around the water inlet at the bottom of the housing 1.

As shown in Fig. 4, the travelling mechanism 3 is composed of a driven wheel 31, a driving wheel 32 and a track 33; an inner surface and an outer surface of the track 33 are provided with teeth; the teeth on the inner surface of the track 33 are engaged with the driving wheel 31 and the driven wheel 32; the outer surface of the track 33 is also provided with a full circle of reinforcing belt; the reinforcing belt is perpendicular to the direction of the teeth on the outer surface of the track 33; both sides of the track 33 are convex and wrap the driving wheel 32 and the driven wheel 31, or the driven wheel 31 and the driving wheel 32 are provided with grooves; the track 33 is nested in the grooves of the driving wheel 32 and the driven wheel 31; and the width of the track 33 is smaller than the width of the grooves.

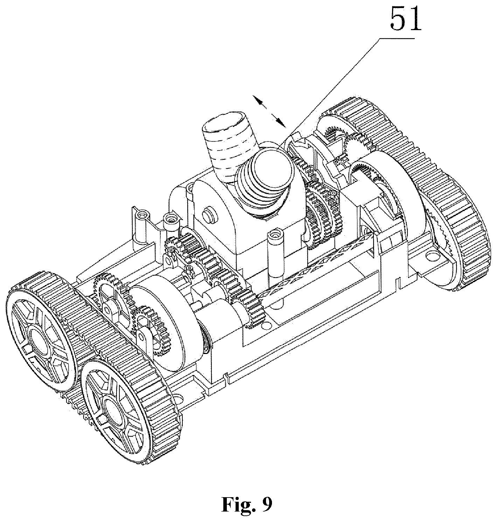

As shown in Fig. 2, Fig. 3 and Fig. 9, the swing head component 51 of the rotating swing joint mechanism 5 can swing back and forth along the upper cover plate 52, and the water outlet joint 511 can rotate. When the cleaner travels to the wall of the pool, the swing head component 51 of the rotating swing joint mechanism 5 can swing the direction to adapt to the connection with a water pipe, thereby reducing a torsional force on the cleaner due to the buoyancy of the water pipe, so that the cleaner is easy to climb up the wall of the pool, so as to increase the cleaning range of the pool.

The working principle of the present invention is as follows: water is sucked in from the water inlet 10 at the bottom of the cleaner housing 1, is rotated by the impeller component 24, and is discharged from the water outlet joint 511. The water outlet joint 511 is connected with the water pipe; the water pipe is connected with a water pump; the impeller component 24 drives the motor output shaft 21; the first gear 22 at one end of the motor output shaft 21 drives the first transmission mechanism 6; and the second gear 23 at the other end drives the second transmission mechanism 7. The first transmission mechanism 6 transmits the power to the third transmission mechanism 8 and the fourth transmission mechanism 9 through the power transmission shaft 61; the third transmission mechanism 8 and the fourth transmission mechanism 9 drive the travelling mechanisms 3 on the left side and the right side of the housing 1; and the second transmission mechanism 7 drives the reversing mechanism 4. Specifically, the second gear 23 drives the second transmission mechanism 7 to rotate. The second transmission mechanism 7 drives the guide member 41 engaged with the second transmission mechanism 7 to rotate together, and the guide member 41 is in contact with the roller 421. The roller 421 swings under the guidance of the guide member 41. The roller 421 drives the roller bracket 422 to slide back and forth. The roller bracket 422 drives the power transmission shaft 51 to slide back and forth together. Since one end of the power transmission shaft 61 engaged with the fourth transmission mechanism 9 is a fixed end, and one end of the power transmission shaft 61 engaged with the third transmission mechanism 8 is a movable end, only one end engaged with the third transmission mechanism 8 can slide back and forth to engage with the driving wheel internal gear 812 or the driving wheel external gear 813. When the power transmission shaft 61 is engaged with the driving wheel internal gear 812, engaging rotation directions are the same direction; and when the power transmission shaft 61 is engaged with the driving wheel external gear 813, the engaging rotation directions are opposite directions. That is, when the rotation directions of the third transmission mechanism 8 and the fourth transmission mechanism 9 are consistent, the rotation directions are advancing directions; and when the rotation directions of the third transmission mechanism 8 and the fourth transmission mechanism 9 are opposite to each other, the rotation directions are turning directions, thereby realizing the reversing.

The above only describes preferred embodiments of the present invention and is not intended to limit the present invention. Therefore, the invention is only limited by the appended claims.

## Claims

1. A suction cleaner for a pool, comprising a housing (1) which is provided with a water inlet (10) in the middle position of the bottom, and further comprising:
a hydraulic motor (2) used for providing power for the cleaner;
travelling mechanisms (3) used for travelling;
a reversing mechanism (4) used for changing a travelling direction;
a joint mechanism (5) used for connecting an external water outlet pipe ,
wherein the hydraulic motor (2) and the reversing mechanism (4) are arranged in the housing (1); the hydraulic motor (2) is arranged in the middle position in the housing (1) and is communicated with the water inlet (10); the travelling mechanisms (3) are symmetrically arranged on the left side and the right side of the housing (1); the joint mechanism (5) is arranged in the middle position on the top of the housing (1) and is in communication with the hydraulic motor (2); one end of a motor output shaft (21) of the hydraulic motor (2) is provided with a first gear (22) and the other end is provided with a second gear (23); the first gear (22) is engaged with a first transmission mechanism (6); the first transmission mechanism (6) is respectively engaged with a third transmission mechanism (8) and a fourth transmission mechanism (9); the third transmission mechanism (8) and the fourth transmission mechanism (9) are respectively engaged with the travelling mechanisms (3) on the left side and the right side of the housing (1); the second gear (23) is engaged with the reversing mechanism (4) through the second transmission mechanism (7); the reversing mechanism (4) is connected with the first transmission mechanism (6); and the water inlet (10), the hydraulic motor (2) and the rotating swing joint mechanism (5) form a water circulation passage for a water stream to pass through, **characterized in that** the joint mechanism (5) is a rotating swing joint mechanism (5) capable of swinging and rotating back and forth relative to the housing, and **in that**
a plurality of rolling skirt wings (11) are symmetrically arranged at the bottom of the housing (1); the rolling skirt wings (11) being rotatably connected with the housing (1);
and the rolling skirt wings (11) being used to increase suction around the water inlet (10) at the bottom of the housing (1).

2. The suction cleaner for the pool according to claim 1, wherein the rotating swing joint mechanism (5) is composed of a swing head component (51), an upper cover plate (52) and a lower fixing bracket (53), wherein the swing head component (51) can swing back and forth and is installed between the upper cover plate (52) and the lower fixing bracket (53); and the upper cover plate (52) is fixedly connected with the lower fixing bracket (53).

3. The suction cleaner for the pool according to claim 2, wherein the swing head component (51) is composed of a water outlet joint (511), a joint fixing bracket (512) and a fixing collar (513), wherein a through hole (5121) is formed on the top of the joint fixing bracket (512); the water outlet joint (511) penetrates through the through hole (5121); the fixing collar (513) is arranged at the through hole (5121), is clamped with the joint fixing bracket (512), and is used for axially fixing the water outlet joint (511) to the joint fixing bracket (512); and the water outlet joint (511) can rotate relative to the joint fixing bracket (512).

4. The suction cleaner for the pool according to claim 1, wherein the first transmission mechanism (6) comprises a power transmission shaft (61) and a transmission gear set (62), wherein the first gear (22) and the transmission gear set (62) are engaged with each other; one end of the power transmission shaft (61) is engaged with the third transmission mechanism (8); the other end of the power transmission shaft (61) is engaged with the fourth transmission mechanism (9); the power transmission shaft (61) is fixedly connected with the transmission gear set (62); and the transmission gear set (62) drives the power transmission shaft (61) to rotate.

5. The suction cleaner for the pool according to claim 4, wherein one end of the power transmission shaft (61) connected with the third transmission mechanism (8) is a two-section gear structure.

6. The suction cleaner for the pool according to claim 1, wherein the second transmission mechanism (7) is a reduction gear set; the third transmission mechanism (8) comprises a driving wheel (81), a third transmission driven wheel (82) and an output shaft (83) with a gear; a driving wheel gear (811) is also arranged on one side of the driving wheel (81) near the travelling mechanisms (3); the driving wheel gear (811) and the driving wheel (81) are of an integrated structure; the driving wheel gear (811) is engaged with the third transmission driven wheel (82); the third transmission driven wheel (82) is engaged with the output shaft (83); the output shaft (83) is connected with the travelling mechanisms (3); and the fourth transmission mechanism (9) has the same structure as the third transmission mechanism (8).

7. The suction cleaner for the pool according to claim 6, wherein the driving wheel (81) is a rotating body having both a driving wheel internal gear (812) and a driving wheel external gear (813), and the driving wheel internal gear (812) and the driving wheel external gear (813) are in coaxial positions; the power transmission shaft (61) in the first transmission mechanism (6) is arranged between the driving wheel internal gear (812) and the driving wheel external gear (813), and is engaged with the driving wheel internal gear (812) or the driving wheel external gear (813); when the power transmission shaft (61) is engaged with the driving wheel internal gear (812), engaging rotation directions are the same direction; and when the power transmission shaft (61) is engaged with the driving wheel external gear (813), the engaging rotation directions are opposite directions.

8. The suction cleaner for the pool according to claim 1, wherein the reversing mechanism (4) comprises a guide member (41) and a movable member (42); the guide member (41) is a cam having a larger radius part and a smaller radius part; the guide member (41) is connected with the second transmission mechanism (7); the second transmission mechanism (7) drives the guide member (41) to rotate; the movable member (42) comprises a roller (421) and a roller bracket (422); the roller (42) is arranged at one end of the roller bracket (422) near the guide member (41) and is rotatably connected with the roller bracket (422); the roller bracket (422) can slide back and forth; the roller bracket (422) is sleeved on the power transmission shaft (61) in the first transmission mechanism (6); the roller bracket (422) drives the power transmission shaft (61) to slide back and forth together; and the guide member (41) is in contact with the roller (421).

9. The suction cleaner for the pool according to claim 1, wherein the travelling mechanism (3) is composed of a driven wheel (31), a driving wheel (32) and a track (33); an inner surface and an outer surface of the track (33) are provided with teeth; the teeth on the inner surface of the track (33) are engaged with the driving wheel (31) and the driven wheel (32); both sides of the track (33) are convex and wrap the driving wheel (32) and the driven wheel (31), or the driven wheel (31) and the driving wheel (32) are provided with grooves; the track (33) is nested in the grooves of the driving wheel (32) and the driven wheel (31); and the width of the track (33) is smaller than the width of the grooves.

## Patentansprüche

1. Saugreiniger für ein Schwimmbecken, umfassend ein Gehäuse (1), das mit einem Wassereinlass (10) in der Mittenposition des Bodens versehen ist, und ferner umfassend:
einen Hydraulikmotor (2), der dazu verwendet wird, Energie für den Reiniger bereitzustellen;
Laufwerke (3) zum Laufen;
einen Umkehrmechanismus (4), der zum Ändern einer Laufrichtung verwendet wird;
einen Verbindungsmechanismus (5) zum Anschließen eines externen Wasserauslassrohrs,
wobei der Hydraulikmotor (2) und der Umkehrmechanismus (4) im Gehäuse (1) angeordnet sind; und wobei der Hydraulikmotor (2) in der Mittenposition im Gehäuse (1) angeordnet und mit dem Wassereinlass (10) verbunden ist; und wobei die Laufwerke (3) symmetrisch auf der linken und rechten Seite des Gehäuses (1) angeordnet sind; und wobei der Verbindungsmechanismus (5) in der Mittenposition auf der Oberseite des Gehäuses (1) angeordnet ist und mit dem Hydraulikmotor (2) in Verbindung steht; und wobei ein Ende einer Motorausgangswelle (21) des Hydraulikmotors (2) mit einem ersten Zahnrad (22) und das andere Ende mit einem zweiten Zahnrad (23) versehen ist; und wobei das erste Zahnrad (22) mit einem ersten Übertragungsmechanismus (6) in Eingriff steht; und wobei der erste Übertragungsmechanismus (6) jeweils mit einem dritten Übertragungsmechanismus (8) und einem vierten Übertragungsmechanismus (9) in Eingriff steht; und wobei der dritte Übertragungsmechanismus (8) und der vierte Übertragungsmechanismus (9) jeweils mit den Laufwerken (3) auf der linken Seite und der rechten Seite des Gehäuses (1) in Eingriff stehen; und wobei das zweite Zahnrad (23) mit dem Umkehrmechanismus (4) durch den zweiten Übertragungsmechanismus (7) in Eingriff steht; und wobei der Umkehrmechanismus (4) mit dem ersten Übertragungsmechanismus (6) verbunden ist; und wobei der Wassereinlass (10), der Hydraulikmotor (2) und der rotierende schwenkende Verbindungsmechanismus (5) einen Wasserzirkulationskanal für den Durchtritt eines Wasserstroms bilden, **dadurch gekennzeichnet, dass** der Verbindungsmechanismus (5) ein rotierender schwenkender Verbindungsmechanismus (5) ist, der in der Lage ist, relativ zum Gehäuse hin und her schwingen und rotieren kann, und dass eine Vielzahl von Rollrandflügeln (11) symmetrisch am Boden des Gehäuses (1) angeordnet sind; wobei die Rollrandflügel (11) drehbar mit dem Gehäuse (1) verbunden sind; und wobei die Rollrandflügel (11) dazu verwendet werden, die Saugwirkung um den Wassereinlass (10) am Boden des Gehäuses (1) herum zu erhöhen.

2. Saugreiniger für das Schwimmbecken nach Anspruch 1, **dadurch gekennzeichnet, dass** der rotierende schwenkende Verbindungsmechanismus (5) aus einer Schwenkkopfkomponente (51), einer oberen Abdeckplatte (52) und einer unteren Befestigungskonsole (53) besteht, wobei die Schwenkkopfkomponente (51) hin und her schwenken kann und zwischen der oberen Abdeckplatte (52) und der unteren Befestigungskonsole (53) installiert ist; und wobei die obere Abdeckplatte (52) fest mit der unteren Befestigungskonsole (53) verbunden ist.

3. Saugreiniger für das Schwimmbecken nach Anspruch 1, **dadurch gekennzeichnet, dass** die Schwenkkopfkomponente (51) aus einem Wasserauslassgelenk (511), einer Gelenkbefestigungskonsole (512) und einem Befestigungskragen (513) besteht, wobei ein Durchgangsloch (5121) auf der Oberseite der Gelenkbefestigungskonsole (512) ausgebildet ist; und wobei das Wasserauslassgelenk (511) das Durchgangsloch (5121) durchdringt; und wobei der Befestigungskragen (513) am Durchgangsloch (5121) angeordnet ist, mit der Gelenkbefestigungskonsole (512) geklemmt ist und zum axialen Befestigen des Wasserauslassgelenks (511) an der Gelenkbefestigungskonsole (512) verwendet wird; und wobei das Wasserauslassgelenk (511) relativ zu der Gelenkbefestigungskonsole (512) rotieren kann.

4. Saugreiniger für das Schwimmbecken nach Anspruch 1, wobei der erste Übertragungsmechanismus (6) eine Kraftübertragungswelle (61) und einen Übertragungszahnradsatz (62) umfasst, wobei das erste Zahnrad (22) und der Übertragungszahnradsatz (62) miteinander in Eingriff stehen; und wobei ein Ende der Kraftübertragungswelle (61) mit dem dritten Übertragungsmechanismus (8) in Eingriff steht; und wobei das andere Ende der Kraftübertragungswelle (61) mit dem vierten Übertragungsmechanismus (9) in Eingriff steht; und wobei die Kraftübertragungswelle (61) fest mit dem Übertragungszahnradsatz (62) verbunden ist; und wobei der Übertragungszahnradsatz (62) die Kraftübertragungswelle (61) zur Rotation antreibt.

5. Saugreiniger für das Schwimmbecken nach Anspruch 4, wobei ein Ende der Kraftübertragungswelle (61), die mit dem dritten Übertragungsmechanismus (8) verbunden ist, eine zweiteilige Getriebestruktur ist.

6. Saugreiniger für das Schwimmbecken nach Anspruch 1, wobei der zweite Übertragungsmechanismus (7) ein Untersetzungszahnradsatz ist; und wobei der dritte Übertragungsmechanismus (8) ein Antriebsrad (81), ein drittes angetriebenes Übertragungsrad (82) und eine Antriebswelle (83) mit einem Zahnrad umfasst; und wobei ein Antriebsradgetriebe (811) ebenfalls auf einer Seite des Antriebsrads (81) in der Nähe der Fahrwerke (3) angeordnet ist; und wobei das Antriebsradgetriebe (811) und das Antriebsrad (81) eine integrierte Struktur haben; und wobei das Antriebsradgetriebe (811) mit dem dritten angetriebenen Übertragungsrad (82) in Eingriff steht; und wobei das dritte angetriebene Übertragungsrad (82) mit der Antriebswelle (83) in Eingriff steht; und wobei die Antriebswelle (83) mit den Fahrwerken (3) verbunden ist; und wobei der vierte Übertragungsmechanismus (9) die gleiche Struktur wie der dritte Übertragungsmechanismus (8) aufweist.

7. Saugreiniger für das Schwimmbecken nach Anspruch 6, wobei das Antriebsrad (81) ein rotierender Körper mit sowohl einem inneren Antriebsradgetriebe (812) als auch einem äußeren Antriebsradgetriebe (813) ist und sich das innere Antriebsradgetriebe (812) und das äußere Antriebsradgetriebe (813) in koaxialen Positionen befinden; und wobei die Kraftübertragungswelle (61) im ersten Übertragungsmechanismus (6) zwischen dem inneren Antriebsradgetriebe (812) und dem äußeren Antriebsradgetriebe (813) angeordnet ist und mit dem inneren Antriebsradgetriebe (812) oder dem äußeren Antriebsradgetriebe (813) in Eingriff steht; wenn die Kraftübertragungswelle (61) mit dem inneren Antriebsradgetriebe (812) in Eingriff steht, sind die Eingriffsrotationsrichtungen die gleiche Richtung; wenn die Kraftübertragungswelle (61) mit dem äußeren Antriebsradgetriebe (813) in Eingriff steht, sind die Eingriffsrotationsrichtungen entgegengesetzte Richtungen.

8. Saugreiniger für das Schwimmbecken nach Anspruch 1, wobei der Umkehrmechanismus (4) ein Führungselement (41) und ein bewegliches Element (42) umfasst; und wobei das Führungselement (41) ein Nocken mit einem Teil mit größerem Radius und einem Teil mit kleinerem Radius ist; und wobei das Führungselement (41) mit dem zweiten Übertragungsmechanismus (7) verbunden ist; und wobei der zweite Übertragungsmechanismus (7) das Führungselement (41) zur Rotation antreibt; und wobei das bewegliche Element (42) eine Rolle (421) und eine Rollenhalterung (422) umfasst; und wobei die Rolle (42) an einem Ende der Rollenhalterung (422) nahe dem Führungselement (41) angeordnet und drehbar mit der Rollenhalterung (422) verbunden ist; und wobei die Rollenhalterung (422) hin und her gleiten kann; und wobei die Rollenhalterung (422) auf der Kraftübertragungswelle (61) in dem ersten Übertragungsmechanismus (6) aufgesetzt ist; und wobei die Rollenhalterung (422) die Kraftübertragungswelle (61) dazu antreibt, gemeinsam hin und her zu gleiten; und wobei das Führungselement (41) in Kontakt mit der Rolle (421) steht.

9. Saugreiniger für das Schwimmbecken nach Anspruch 1, wobei das Laufwerk (3) aus einem angetriebenen Rad (31), einem Antriebsrad (32) und einer Schiene (33) besteht; und wobei eine Innenfläche und eine Außenfläche der Schiene (33) mit Zähnen versehen sind; und wobei die Zähne an der Innenfläche der Schiene (33) mit dem Antriebsrad (31) und dem angetriebenen Rad (32) in Eingriff stehen; und wobei die beiden Seiten der Schiene (33) konvex sind und das Antriebsrad (32) und das angetriebene Rad (31) umgeben, oder das angetriebene Rad (31) und das Antriebsrad (32) mit Rillen versehen sind; und wobei die Schiene (33) in die Rillen des Antriebsrades (32) und des angetriebenen Rades (31) eingebettet sind; und wobei die Breite der Schiene (33) kleiner ist als die Breite der Rillen ist.

## Revendications

1. Aspirateur pour piscine, comprenant un boîtier (1) qui est pourvu d'une entrée d'eau (10) au milieu d'un fond du boîtier (1), et comprenant en outre :
un moteur hydraulique (2) utilisé pour fournir de l'énergie audit aspirateur;
mécanismes de déplacement (3) utilisés pour se déplacer;
un mécanisme d'inversion (4) utilisé pour changer une direction de déplacement;
un mécanisme de joint (5) utilisé pour connecter un tuyau de sortie d'eau externe;
dans lequel ledit moteur hydraulique (2) et ledit mécanisme d'inversion (4) sont disposés dans ledit boîtier (1); ledit moteur hydraulique (2) est disposé au milieu dans ledit boîtier (1) et communique avec ladite entrée d'eau (10); lesdits mécanismes de déplacement (3) sont disposés symétriquement sur le côté gauche et le côté droit dudit boîtier (1); ledit mécanisme de joint (5) est disposé au milieu sur le dessus dudit boîtier (1) et est en communication avec ledit moteur hydraulique (2); une extrémité d'un arbre de sortie de moteur (21) dudit moteur hydraulique (2) est munie d'un premier engrenage (22) et l'autre extrémité est pourvue d'un deuxième engrenage (23); ledit premier engrenage (22) est en prise avec un premier mécanisme de transmission (6); ledit premier mécanisme de transmission (6) est respectivement en prise avec un troisième mécanisme de transmission (8) et un quatrième mécanisme de transmission (9); ledit troisième mécanisme de transmission (8) et ledit quatrième mécanisme de transmission (9) sont respectivement en prise avec lesdits mécanismes de déplacement (3) sur ledit côté gauche et ledit côté droit dudit boîtier (1); ledit deuxième engrenage (23) est en prise avec ledit mécanisme d'inversion (4) par l'intermédiaire dudit deuxième mécanisme de transmission (7); ledit mécanisme d'inversion (4) est connecté audit premier mécanisme de transmission (6); et ladite entrée d'eau (10), ledit moteur hydraulique (2) et ledit mécanisme de joint d'oscillation rotatif (5) forment un passage de circulation d'eau pour le passage d'un courant d'eau, **caractérisé en ce que** ledit mécanisme de joint (5) est un mécanisme de joint d'oscillation rotatif (5) capable de se balancer et de tourner d'avant en arrière par rapport audit boîtier, et **en ce qu'**une pluralité d'ailettes de jupe roulante (11) sont disposées symétriquement audit fond dudit boîtier (1); lesdites ailes de jupe roulante (11) étant reliées de manière rotative audit boîtier (1); et lesdites ailes de jupe roulante (11) étant utilisées pour augmenter l'aspiration autour de ladite entrée d'eau (10) audit fond dudit boîtier (1).

2. Aspirateur pour piscine selon la revendication 1, dans lequel ledit mécanisme de joint rotatif (5) est composé d'un élément de tête pivotante (51), d'une plaque de couverture supérieure (52) et d'un support de fixation inférieur (53), dans lequel ledit élément de tête pivotante (51) peut osciller d'avant en arrière et est installé entre ladite plaque de couverture supérieure (52) et ledit support de fixation inférieur (53); et ladite plaque de couverture supérieure (52) est reliée de manière fixe audit support de fixation inférieur (53).

3. Aspirateur pour piscine selon la revendication 2, dans lequel ledit élément de tête pivotante (51) est composé d'un joint de sortie d'eau (511), d'un support de fixation de joint (512) et d'un collier de fixation (513), dans lequel un trou traversant (5121) est formé sur le dessus dudit support de fixation de joint (512); ledit joint de sortie d'eau (511) pénètre à travers ledit trou traversant (5121); ledit collier de fixation (513) est disposé au niveau dudit trou traversant (5121), est serré avec ledit support de fixation de joint (512) et est utilisé pour fixer axialement ledit joint de sortie d'eau (511) audit support de fixation de joint (512); et ledit joint de sortie d'eau (511) peut tourner par rapport audit support de fixation de joint (512).

4. Aspirateur pour piscine selon la revendication 1, dans lequel ledit premier mécanisme de transmission (6) comprend un arbre de transmission de puissance (61) et un train d'engrenages de transmission (62), dans lequel ledit premier engrenage (22) et ledit train d'engrenages de transmission (62) sont engagés l'un avec l'autre; une extrémité dudit arbre de transmission de puissance (61) est en prise avec ledit troisième mécanisme de transmission (8); l'autre extrémité dudit arbre de transmission de puissance (61) est en prise avec ledit quatrième mécanisme de transmission (9); ledit arbre de transmission de puissance (61) est connecté de manière fixe audit train d'engrenages de transmission (62); et ledit train d'engrenages de transmission (62) entraîne ledit arbre de transmission de puissance (61) à tourner.

5. Aspirateur pour piscine selon la revendication 4, dans lequel une extrémité dudit arbre de transmission de puissance (61) reliée audit troisième mécanisme de transmission (8) est une structure d'engrenage à deux sections.

6. Aspirateur pour piscine selon la revendication 1, **caractérisé en ce que** ledit deuxième mécanisme de transmission (7) est un train d'engrenages de réducteur; ledit troisième mécanisme de transmission (8) comprend une roue motrice (81), une troisième roue menée de transmission (82) et un arbre de sortie (83) avec un engrenage; un engrenage de roue motrice (811) est également agencé sur un côté de ladite roue motrice (81) à proximité desdits mécanismes de déplacement (3); ledit engrenage de roue motrice (811) et ladite roue motrice (81) sont d'une structure intégrée; ledit engrenage de roue motrice (811) est en prise avec ladite troisième roue menée de transmission (82); ladite troisième roue menée de transmission (82) est en prise avec ledit arbre de sortie (83); ledit arbre de sortie (83) est connecté auxdits mécanismes de déplacement (3); et ledit quatrième mécanisme de transmission (9) a ladite même structure que ledit troisième mécanisme de transmission (8).

7. Aspirateur pour piscine selon la revendication 6, **caractérisé en ce que** ladite roue motrice (81) est un corps tournant ayant à la fois un engrenage interne de roue motrice (812) et un engrenage externe de roue motrice (813), et ledit engrenage interne de roue motrice (812) et ledit engrenage externe de roue motrice (813) sont dans des positions coaxiales; ledit arbre de transmission de puissance (61) dans ledit premier mécanisme de transmission (6) est disposé entre ledit engrenage interne de roue motrice (812) et ledit engrenage externe de roue motrice (813), et est en prise avec ledit engrenage interne de roue motrice (812) ou ledit engrenage extérieur de la roue motrice (813); lorsque ledit arbre de transmission de puissance (61) est en prise avec ledit engrenage interne de roue d'entraînement (812), sens de rotation d'engagement sont les mêmes; et lorsque ledit arbre de transmission de puissance (61) est en prise avec ledit engrenage externe de roue motrice (813), lesdits sens de rotation d'engagement sont opposés.

8. Aspirateur pour piscine selon la revendication 1, **caractérisé en ce que** ledit mécanisme d'inversion (4) comprend un élément de guidage (41) et un élément mobile (42); ledit élément de guidage (41) est une came ayant une partie de rayon plus grand et une partie de rayon plus petit; ledit élément de guidage (41) est connecté audit second mécanisme de transmission (7); ledit deuxième mécanisme de transmission (7) entraîne en rotation ledit élément de guidage (41); ledit élément mobile (42) comprend un rouleau (421) et un support de rouleau (422); ledit rouleau (42) est agencé à une extrémité dudit support de rouleau (422) à proximité dudit élément de guidage (41) et est connecté de manière rotative audit support de rouleau (422); ledit support de rouleau (422) peut coulisser d'avant en arrière; ledit support de rouleau (422) est gainé sur ledit arbre de transmission de puissance (61) dans ledit premier mécanisme de transmission (6); ledit support de rouleau (422) entraîne ledit arbre de transmission de puissance (61) pour coulisser ensemble d'avant en arrière; et ledit élément de guidage (41) est en contact avec ledit rouleau (421).

9. Aspirateur pour piscine selon la revendication 1, **caractérisé en ce que** ledit mécanisme de déplacement (3) est composé d'une roue menée (31), d'une roue motrice (32) et d'une chenille (33); une surface intérieure et une surface extérieure de ladite chenille (33) sont munies de dents; lesdites dents sur ladite surface intérieure de ladite chenille (33) sont en prise avec ladite roue motrice (31) et ladite roue menée (32); deux côtés de ladite chenille (33) sont convexes et enveloppent ladite roue motrice (32) et ladite roue menée (31), ou ladite roue menée (31) et ladite roue motrice (32) sont pourvues de rainures; ladite chenille (33) est emboîtée dans lesdites rainures de ladite roue motrice (32) et de ladite roue menée (31); et la largeur de ladite chenille (33) est inférieure à la largeur desdites rainures.
